# EUROPÄISCHE PATENTANMELDUNG

(11) **EP 0 881 155 A1**
(43) Veröffentlichungstag der Anmeldung: **02.12.1998**
(21) Anmeldenummer: 98101686.8
(22) Anmeldetag: 30.01.1998
(51) Int. Cl.: B65D 25/42, A47G 19/22, B62J 11/00, B65D 81/38, A47J 41/00

(54) **Trinkflasche**

(30) Priorität: 21.03.1997 DE 29705178 U
(71) Anmelder: alfi Zitzmann GmbH Isoliergefässe und Metallwaren, D-97877 Wertheim (DE)
(72) Erfinder:
(74) Vertreter: Schwan, Gerhard, Dipl.-Ing.

(57) **Zusammenfassung**

Eine Trinkflasche, insbesondere eine Fahrradflasche, ist versehen mit einem doppelwandigen Isolierkörper **(10)**, der einen nach oben offenen Raum **(16)** zur Aufnahme eines Getränks bildet und an seiner Außenseite in der Nähe der Öffnung mit einer Eingriffsanordnung **(20)** versehen ist, einer Verschlußkappe **(18)**, die eine die Öffnung des Isolierkörpers **(10)** überdeckende Verschlußfläche **(24)** und einen den Isolierkörper umgreifenden Rand sowie eine mit der Eingriffsanordnung **(20)** zusammenwirkende Verriegelungsanordnung **(22)** aufweist, wobei in der Verschlußfläche **(24)** ein Durchbruch **(26)** vorgesehen ist, mit welchem ein von der Verschlußfläche nach oben abstehendes flexibles Schlauchstück **(36)** verbunden ist, sowie mit einem an der Verschlußkappe **(18)** angebrachten Klappdeckel **(34)**, der im geschlossenen Zustand einen Austritt von Flüssigkeit aus dem Raum **(16)** verhindert.

## Beschreibung

Die vorliegende Erfindung bezieht sich auf eine Trinkflasche für Sport und Reise, insbesondere auf eine Fahrradflasche.

Trinkflaschen der eingangs genannten Art werden zu zahlreichen Gelegenheiten eingesetzt, um Getränke beispielsweise in die Schule, auf Ausflüge und Wanderungen oder zum bzw. beim Sport mitzunehmen.

Auf dem Markt finden sich daher verschiedene Arten von Trinkflaschen, die in Abhängigkeit von dem gewünschten Einsatzbereich unterschiedlich ausgestattet sind. So sind beispielsweise für Wanderer oder Bergsteiger besonders leichte Flaschen, zumeist aus Aluminium, erhältlich, die mit einfachen Drehverschlüssen gegen ein Auslaufen des Flascheninhalts gesichert sind. Insbesondere für den Radsport wurden Trinkflaschen mit einem speziellen Verschlußsystem auf den Markt gebracht, welches eine Einhandbedienung der Trinkflasche erlaubt. Dabei weist der Verschluß eine mit einem Trinknippel versehene Kappe auf, die durch Drehung verriegelt werden kann.

Im entriegelten Zustand läßt sich der Flaschenverschluß dadurch öffnen, daß man mit den Zähnen an dem Trinknippel zieht.

Es ist Aufgabe der vorliegenden Erfindung, eine Trinkflasche der eingangs genannten Art zu schaffen, welche eine hohe Isolierfähigkeit aufweist und dennoch robust und leicht zu bedienen ist.

Diese Aufgabe wird erfindungsgemäß gelöst durch eine Trinkflasche, insbesondere eine Fahrradflasche, mit:
- einem doppelwandigen Isolierkörper, der einen nach oben offenen Raum zur Aufnahme eines Getränks bildet und an seiner Außenseite in der Nähe der Öffnung mit einer Eingriffsanordnung versehen ist,
- einer Verschlußkappe, die eine die Öffnung des Isolierkörpers überdeckende Verschlußfläche und einen den Isolierkörper umgreifenden Rand sowie eine mit der Eingriffsanordnung zusammenwirkende Verriegelungsanordnung aufweist,
- wobei in der Verschlußfläche ein Durchbruch vorgesehen ist, mit welchem ein von der Verschlußfläche nach oben abstehendes flexibles Schlauchstück verbunden ist, und
- einem an der Verschlußkappe angebrachten Klappdeckel, der im geschlossenen Zustand einen Austritt von Flüssigkeit aus dem Raum zur Aufnahme des Getränks verhindert.

Die Innenwand und die Außenwand des doppelwandigen Isolierkörpers sind vorzugsweise aus Metall, insbesondere rostfreiem Edelstahl, gefertigt, wobei sich in diesem Fall eine besonders hohe Isolierfähigkeit erzielen läßt, wenn der Raum zwischen der Innenwand und der Außenwand evakuiert ist. Es ist jedoch auch möglich, die Innenwand und/oder die Außenwand des doppelwandigen Isolierkörpers aus Kunststoff herzustellen, wobei sich dann die Isolierfähigkeit weiter erhöhen läßt, wenn der Raum zwischen der Innenwand und der Außenwand beispielsweise mit PE-Schaum ausgeschäumt wird.

Somit wird erfindungsgemäß eine Trinkflasche geschaffen die aufgrund des doppelwandigen Isolierkörpers hohe Isolierfähigkeit sowohl für heiße als auch für kalte Getränke aufweist. Da auf zerbrechliche Teile, wie sie bei herkömmlichen Glasisoliergefäßen benutzt werden, verzichtet wird, ist die Trinkflasche - bei Verwendung entsprechender Materialien für die Verschlußkappe - äußerst robust und eignet sich somit insbesondere für die eingangs genannten Einsatzgebiete, wie z.B. Reise und Sport.

Da die gesamte Verschlußmechanik in der von dem Isolierkörper lösbaren Verschlußkappe angeordnet ist, läßt sich der Isolierkörper einerseits leicht befüllen und andererseits problemlos reinigen, beispielsweise in einer Spülmaschine.

Desweiteren kann ein Behälterschlauch vorgesehen sein, der einen Durchtritt der in die Trinkflasche einzubringenden Flüssigkeit zu dem flexiblen Schlauchstück gestattet und der sich von der Verschlußfläche nach unten bis in die Nähe des Bodens des Isolierkörpers erstreckt. In diesem Fall muß die Trinkflasche beim Trinken nicht gekippt werden, was andernfalls beispielsweise bei deren Verwendung beim Radfahren Probleme bereiten könnte.

Ist ferner eine die Verschlußfläche durchdringende Entlüftungsöffnung vorgesehen, ergibt sich ein gleichmäßiger Austritt des in dem Isolierkörper befindlichen Getränks, da auf diese Weise ein Druckausgleich beim Trinken bewirkt wird.

Falls eine die Verschlußfläche durchdringende Entlüftungsöffnung vorgesehen ist, ist es von Vorteil wenn der Klappdeckel so ausgebildet ist, daß er im geschlossenen Zustand die Entlüftungsöffnung verschließt und somit einen Flüssigkeitsaustritt durch die Entlüftungsöffnung bei deren Nichtbenutzung verhindert..

Soll die Trinkflasche in Verbindung mit einem beispielsweise an einem Fahrrad befestigten Flaschenhalter benutzt werden, läßt sich ein Verkratzen der Außenseite des Isolierkörpers beim Einführen in und Herausnehmen aus dem Flaschenhalter dadurch vermeiden, daß ferner ein zumindest den unteren Teil des Isolierkörpers umgreifendes Adapterstück vorgesehen ist.

Die dem Isolierkörper zugeordnete Eingriffsanordnung und die der Verschlußkappe zugeordnete Verriegelungsanordnung können als miteinander zusammenwirkende Gewinde ausgebildet sein oder gemeinsam einen Bajonettverschluß bilden, wobei vorteilhafterweise zwischen dem Isolierkörper und der Verschlußkappe eine Dichtung vorgesehen sein kann.

Ein Ausführungsbeispiel der Erfindung wird nachfolgend unter Bezugnahme auf die beiliegenden Zeichnungen näher erläutert. Es zeigen
Fig. 1 eine Ansicht, teilweise im Schnitt, teilweise als Aufsicht, einer erfindungsgemäßen Trinkflasche, und
Fig. 2 eine Ansicht ähnlich Fig. 1, jedoch mit geöffnetem Klappdeckel.

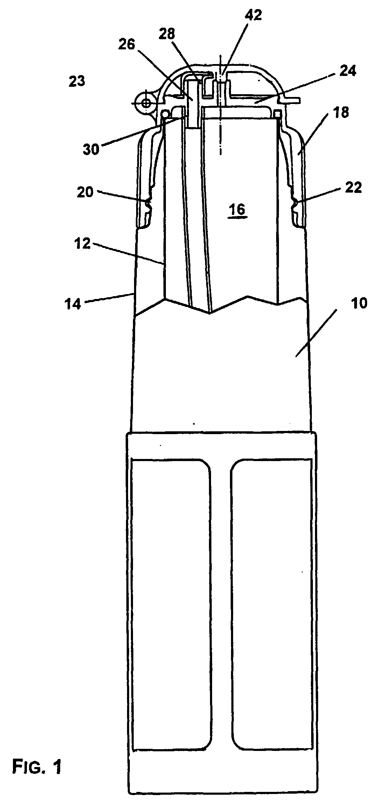

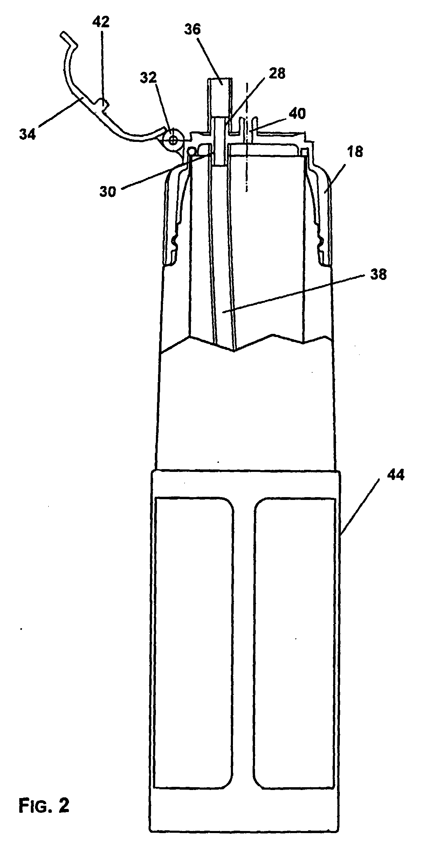

Die in Fig. 1 gezeigte Trinkflasche weist einen doppelwandigen Isolierkörper 10 aus Edelstahl auf, bei welchem der Raum zwischen der Innenwand 12 und der Außenwand 14, evakuiert ist, um den von der Innenwand 12 gebildeten Raum 16 zur Aufnahme eines Getränks thermisch zu isolieren. Über das obere Ende des Stahlkörpers 10 ist eine Verschlußkappe 18 aufgesetzt, und mittels an dem Stahlkörper und der Verschlußkappe vorgesehenen Gewinden 20, 22 gesichert, wobei zwischen dem oberen Rand des Stahlkörpers 10 und der Verschlußkappe 18 eine Dichtung 23, hier ein O-Ring, vorgesehen ist. In der die Öffnung des Stahlkörpers 10 überdeckenden Verschlußfläche 24 der Verschlußkappe 18 ist ein Durchbruch 26 vorgesehen. Bei der in den Zeichnungen gezeigten Ausführungsform sind in der Achse des Durchbruchs 26 ringförmige Stutzen sowohl oben (28) als auch unten (30) an die Verschlußfläche 24 angeformt, deren Funktion nachstehend unter Bezugnahme auf Fig. 2 erläutert wird.

Fig. 2 zeigt die Trinkflasche nachdem ein mittels eines Gelenks 32 schwenkbar an der Verschlußkappe 18 angebrachter Klappdeckel 34 nach oben aufgeklappt wurde. Durch das Aufklappen des Deckels 34 stellt sich ein auf den oberen Stutzen 28 aufgestecktes flexibles Schlauchstück 36 nach oben auf. Auf den unteren Stutzen 30 ist ein weiteres Schlauchstück 38 aufgesteckt, welches von der Verschlußfläche 24 bis in die Nähe des Bodens des Stahlkörpers 10 reicht. In dem in Fig. 2 gezeigten Zustand kann durch Saugen an dem kurzen Schlauchstück 36 aus der Trinkflasche getrunken werden, wobei das Getränk über das untere Ende des Schlauchstücks 38 angesaugt wird und dieses wie einen gewöhnlichen Trinkhalm passiert. Um beim Trinken für einen Druckausgleich im Innern der Trinkflasche zu sorgen, ist in der Verschlußfläche 24 eine Entlüftungsöffnung 40 vorgesehen, über die während dem Trinken Luft in das Innere der Trinkflasche gelangen kann, um so das aus dem Innenraum abgezogene Flüssigkeitsvolumen durch Luft zu ersetzen.

Wenn kein Schlauchstück 38 auf den unteren Stutzen aufgesteckt ist, kann aus der Isolierflasche wie aus einer gewöhnlichen Flasche durch Verkippen getrunken werden.

Zum Verschließen der Trinkflasche wird einfach der Klappdeckel 34 wieder heruntergeklappt, wodurch das flexible Schlauchstück 36 abgeknickt wird, wie es in Fig. 1 dargestellt ist. Um einen Austritt von Flüssigkeit durch die Entlüftungsöffnung zu verhindern, wenn die Trinkflasche beim Transport gekippt oder auf den Kopf gestellt wird, ist an der Unterseite des Klappdeckels 34 ein Stopfen 42 vorgesehen, der sich gegen den Entlüftungsöffnung anlegt und diese verschließt.

Wie der obigen Beschreibung zu entnehmen ist, wird zum 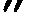 Bedienen" der Trinkflasche nur eine Hand benötigt, nämlich zum Aufklappen des Klappdeckels, weshalb sich die vorliegend beschriebene Trinkflasche auch insbesondere als Fahrradflasche eignet, da der die Trinkflasche mitführende Radfahrer zum Trinken nicht anhalten oder beide Hände vom Lenker nehmen muß. Um zu vermeiden, daß die Trinkflasche verkratzt, wenn sie in einen an einem Fahrrad befestigten Flaschenhalter eingeführt oder aus diesem herausgenommen wird, ist vorzugsweise ein Adapterstück 44 vorgesehen, welches zumindest den unteren Teil des Isolierkörpers umgreift und welches so bemessen ist, daß es in die handelsüblichen Flaschenhalter paßt.

## Patentansprüche

1. Trinkflasche, insbesondere Fahrradflasche, mit:
- einem doppelwandigen Isolierkörper (10), der einen nach oben offenen Raum (16) zur Aufnahme eines Getränks bildet und an seiner Außenseite in der Nähe der Öffnung mit einer Eingriffsanordnung (20) versehen ist,
- einer Verschlußkappe (18), die eine die Öffnung des Isolierkörpers (10) überdeckende Verschlußfläche (24) und einen den Isolierkörper umgreifenden Rand sowie eine mit der Eingriffsanordnung (20) zusammenwirkende Verriegelungsanordnung (22) aufweist,
- wobei in der Verschlußfläche (24) ein Durchbruch (26) vorgesehen ist, mit welchem ein von der Verschlußfläche nach oben abstehendes flexibles Schlauchstück (36) verbunden ist, und
- einem an der Verschlußkappe (18) angebrachten Klappdeckel (34), der im geschlossenen Zustand einen Austritt von Flüssigkeit aus dem Raum (16) verhindert.

2. Trinkflasche nach Anspruch 1, dadurch gekennzeichnet, daß ferner ein Behälterschlauch (38) vorgesehen ist, der einen Durchtritt der in die Trinkflasche einzubringenden Flüssigkeit zu dem flexiblen Schlauchstück (36) gestattet und der sich von der Verschlußfläche (24) nach unten bis in die Nähe des Bodens des Isolierkörpers (10) erstreckt.

3. Trinkflasche nach einem der vorhergehenden Ansprüche, dadurch gekennzeichnet, daß ferner eine die Verschlußfläche (24) durchdringende Entlüftungsöffnung (40) vorgesehen ist.

4. Trinkflasche nach Anspruch 3, dadurch gekennzeichnet, daß der Klappdeckel (34) so ausgebildet ist, daß er im geschlossenen Zustand die Entlüftungsöffnung (40) verschließt.

5. Trinkflasche nach einem der vorhergehenden Ansprüche, dadurch gekennzeichnet, daß ferner ein zumindest den unteren Teil des Isolierkörpers (10) umgreifendes Adapterstück (44) vorgesehen ist.

6. Trinkflasche nach einem der vorhergehenden Ansprüche, dadurch gekennzeichnet, die Eingriffsanordnung (20) und die Verriegelungsanordnung (22) als miteinander zusammenwirkende Gewinde ausgebildet sind.

7. Trinkflasche nach einem der Ansprüche 1 bis 6, dadurch gekennzeichnet, die Eingriffsanordnung und die Verriegelungsanordnung gemeinsam einen Bajonettverschluß bilden.

8. Trinkflasche nach einem der vorhergehenden Ansprüche, dadurch gekennzeichnet, daß zwischen dem Isolierkörper (10) und der Verschlußkappe (18) eine Dichtung (23) vorgesehen ist.

9. Trinkflasche nach einem der vorhergehenden Ansprüche, dadurch gekennzeichnet, daß die Innenwand (12) und die Außenwand (14) des doppelwandigen Isolierkörpers (10) aus Metall gefertigt sind.

10. Trinkflasche nach Anspruch 9, dadurch gekennzeichnet, daß der Isolierkörper (10) aus Edelstahl gefertigt ist.

11. Trinkflasche nach einem der Ansprüche 1 bis 8, dadurch gekennzeichnet, daß die Innenwand (12) des doppelwandigen Isolierkörpers (10) aus Kunststoff gefertigt ist und die Außenwand (14) des doppelwandigen Isolierkörpers aus Metall gefertigt ist.

12. Trinkflasche nach einem der Ansprüche 1 bis 8, dadurch gekennzeichnet, daß die Innenwand (12) des doppelwandigen Isolierkörpers (10) aus Metall gefertigt ist und die Außenwand (14) des doppelwandigen Isolierkörpers aus Kunststoff gefertigt ist.

13. Trinkflasche nach einem der Ansprüche 1 bis 8, dadurch gekennzeichnet, daß die Innenwand (12) und die Außenwand (14) des doppelwandigen Isolierkörpers (10) aus Kunststoff gefertigt sind.

14. Trinkflasche nach einem der Ansprüche 9 oder 10, dadurch gekennzeichnet, daß der Raum zwischen der Innenwand (12) und der Außenwand (14) des doppelwandigen Isolierkörpers (10) evakuiert ist.

15. Trinkflasche nach einem der Ansprüche 9 bis 13, dadurch gekennzeichnet, daß der Raum zwischen der Innenwand (12) und der Außenwand (14) des doppelwandigen Isolierkörpers (10) ausgeschäumt ist.
